# EUROPÄISCHE PATENTANMELDUNG

(11) **EP 4 549 296 A1**
(43) Veröffentlichungstag der Anmeldung: **07.05.2025**
(21) Anmeldenummer: 24193326.6
(22) Anmeldetag: 07.08.2024
(51) Int. Cl.: B62D 49/04, E01H 5/06

(54) **SCHNELLBEFESTIGUNGSVORRICHTUNG UND KUPPLUNGSANORDNUNG FÜR ANBAUGERÄTE AN NUTZFAHRZEUGEN**

(30) Priorität: 06.11.2023 DE 202023106465 U
(71) Anmelder: Bucher Municipal Wernberg GmbH, 92533 Wernberg-Köblitz (DE)
(72) Erfinder: Zeitler, Sandro, 92533 Wernberg-Köblitz (DE)
(74) Vertreter: Glück Kritzenberger Patentanwälte PartGmbB

(57) **Zusammenfassung**

Die Erfindung betrifft eine Schnellwechselvorrichtung für Anbaugeräte an Nutzfahrzeugen, insbesondere für Schneepflüge oder Kehrbesen, zumindest umfassend eine Anbauplatte mit einer Frontseite und einer Rückseite, wobei an der Frontseite der Anbauplatte das Anbaugerät zumindest mittelbar anordenbar ist und die Rückseite der Anbauplatte an einer fahrzeugseitig monierten Anbaueinrichtung befestigbar ist. Die Anbauplatte weist im oberen Bereich der Rückseite zur lösbar hängenden Befestigung an der Anbaueinrichtung eine Kupplungseinrichtung auf, die zumindest zwischen einer die Anbaueinrichtung freigebenden Öffnungsposition und einer die Anbaueinrichtung kraft- und/oder formschlüssig greifenden Schließposition verstellbar ausgebildet ist.

## Beschreibung

### Technisches Gebiet

Die Erfindung betrifft eine Schnellwechselvorrichtung für Anbaugeräte an Nutzfahrzeugen sowie eine Kupplungsanordnung mit einer solchen Schnellwechselvorrichtung.

### Stand der Technik

Wechselvorrichtungen für Anbaugeräte an Nutzfahrzeugen, insbesondere für Schneepflüge, Kehrbesen oder Seitenschneepflüge sind aus dem Stand der Technik bereits bekannt. Hierbei sind die Anbauplatten, auch als Frontanbauplatten bezeichnet, für die Winterdienst- und Straßenbetriebsdienstausstattung nach DIN EN 15432-1 bisher fest am Nutzfahrzeug montiert, bzw. angebaut. Nachteilig wirkt sich dabei unter anderem das zusätzliche Gewicht der am Nutzfahrzeug, bzw. Trägerfahrzeug festverbauten Frontanbauplatte mit negativen Auswirkungen auf die Vorderachslast aus.

Ferner wird diese Problematik durch neue Verordnung EU-Verordnung 2019/2144 für Sicherheitssysteme nach deren Inkrafttreten noch weitergehend in den Fokus rücken. Mit dieser neuen EU-Verordnung wird die Rechtsgrundlage der "Vehicle General Safety Regulations" (kurz GSR) aktualisiert, die immer neuere und moderne Sicherheitssysteme für EU-Neuwägen, also auch Nutzfahrzeuge bzw. Trägerfahrzeuge, vorschreibt. Diese neuen GSR-Vorschriften werden in den EU-Ländern ab Juli 2024 also auch für neu zugelassene Lkw und Sattelzugmaschinen mit einem zulässigen Gesamtgewicht von über 3,5 Tonnen gelten.

Insbesondere ist hierbei vorgesehen, die bisherigen Ausnahmen für die Abschaltung des Notbremsassistenten bei Fahrzeugen mit N3G-Zulassung, also mit bestimmten Voraussetzungen für den Baustellenbetrieb, grundsätzlich abzuschaffen. Eine solche Abschaltung der Notbremsassistenten ist vom Fahrer dann nur noch bei einem Neustart des Nutzfahrzeugs manuell möglich, wenn ein Frontanbaugerät, wie beispielweise ein Front-pflug oder Kehrbesen, am Nutzfahrzeug angebaut ist.

Gleichzeitig wird es durch die Größe und Positionierung der Sensoreinrichtung für die Notbremsassistenten, die zudem einen immer größeren Erfassungswinkel der Sensoreinrichtung erfordern und bereitstellen müssen, notwendig, konstruktive Änderungen an der Befestigungsvorrichtung für die Anbaugeräte, insbesondere an der fest montierten An-bauplatte, vorzunehmen.

Alle bisherig bekannten Lösungsansätze beschäftigen sich mit Anpassungen an der an dem Trägerfahrzeug fest verbauten Anbauplatte. Hier sind konstruktive Anpassungen wie Ausschnitte in den Anbauplatten, oder ein Versetzen der Notbremsassistenzsysteme angedacht.

Ferner ist beispielsweise aus der Druckschrift DE 86 20 312.6 U1 bereits eine Wechsel-vorrichtung an Lastkraftwagen bekannt geworden, die aus einer fahrzeugseitig fest montierten Anbauplatte und einer an dem zu befestigenden Anbaugerät vorgesehenen Mon-tageplatte besteht. Die Befestigung der Montageplatte an der Anbauplatte erfolgt durch Einhängen, wobei an der Anbauplatte eine Pratze vorgesehen ist, die eine Öffnung der Montageplatte durchdringt und die Montageplatte rückseitig zumindest teilweise hinter-greift. Zur unterseitigen und seitlichen lagerichtigen Befestigung bzw. Fixierung sind Schraubschnellverschlüsse in Form von Schwenkbolzen vorgesehen, mittels denen die Montageplatte an der Anbauplatte festgelegt wird.

Nachteilig an dieser Lösung ist, dass nach der Montage des Anbaugeräts nach einer gewissen Verwendungsdauer ein Nachziehen der Schraubbolzen erforderlich ist, um eine Lockerung der Schraubbolzen beispielsweise durch bei der Verwendung des Anbaugeräts auftretende Vibrationen ausschließen zu können. Dies führt insbesondere bei Verwendung der Wechselvorrichtung bei Schneepflügen oder Seitenschneepflügen dazu, dass der Fahrer des Schneepfluges bei widrigen Wetterbedingungen das Führerhaus verlassen muss und an der schwer zugänglichen Stelle hinter dem Schneepflug, an denen die Schnellwechselvorrichtung montiert ist, die Schraubbolzen nachzuziehen.

### Darstellung der Erfindung

Aufgabe der vorliegenden Erfindung ist es, eine Schnellbefestigungsvorrichtung für Anbaugeräte an Nutzfahrzeugen anzugeben, die die aufgezeigten Nachteile aus dem Stand der Technik vermeidet und insbesondere einen problemlosen Einsatz von Sensoren für von Notbremsassistenten an Nutzfahrzeugen ermöglicht.

Diese Aufgabe wird durch eine Schnellbefestigungsvorrichtung für Anbaugeräte an Nutzfahrzeugen gemäß den Merkmalen des unabhängigen Patentanspruchs 1 gelöst. Ferner wird zur Lösung der Aufgabe eine Kupplungsanordnung für Anbaugeräte an Nutzfahrzeugen gemäß den Merkmalen des unabhängigen Patentanspruchs 8 angegeben. Die jeweiligen Unteransprüche betreffen dabei besonders vorteilhafte Weiterbildungen der Erfindung.

Gemäß einem ersten wesentlichen Aspekt betrifft die vorliegende Erfindung eine Schnellwechselvorrichtung für Anbaugeräte an Nutzfahrzeugen, insbesondere für Schneepflüge oder Kehrbesen. Derartige Nutzfahrzeuge werden auch als Trägerfahrzeuge bezeichnet. Insbesondere handelt es sich bei solchen Nutzfahrzeugen um Lastkraftwägen, die für kommunale Einsätze mit Anbaugeräten, wie Schneepflügen, Kehrbesen oder sonstigen Frontanbaugeräten ausgestattet werden.

Erfindungsgemäß weist die Schnellwechselvorrichtung zumindest eine Anbauplatte mit einer Frontseite und einer Rückseite auf, wobei an der Frontseite der Anbauplatte das Anbaugerät zumindest mittelbar anordenbar ist und die Rückseite der Anbauplatte an einer fahrzeugseitig monierten Anbaueinrichtung befestigbar ist.

Die Anbauplatte ist hierbei insbesondere aus einem metallischen Werkstoff, wie beispielsweise Eisen oder Stahl, hergestellt und weist eine hohe mechanische Festigkeit auf. Vorzugsweise ist die Anbauplatte zumindest näherungsweise plan, bzw. planar ausgebildet. Das Anbaugerät ist vorzugsweise fest, jedoch lösbar, an der Anbauplatte befestigt und kann, so denn das Anbaugerät nicht gebraucht wird, an dem Anbaugerät verbleiben und mit samt der Anbauplatte demontiert werden.

In anderen Worten kann also die Anbauplatte dauerhaft einem Anbaugerät zugeordnet werden und an dem Anbaugerät montiert bleiben. Für eine Verwendung des Anbaugeräts muss dann lediglich die Anbauplatte mit der fahrzeugseitig montierten Anbaueinrichtung verbunden werden. Wird an dem Nutzfahrzeug aus gegebenen Anlässen kein Anbaugerät mehr gebraucht, weil beispielsweise eine längere schneelose Zeitperiode erwartet wird, so muss lediglich die Anbaueinrichtung an dem Fahrzeug verbleiben und der Schneepflug samt fest zugeordneter Anbauplatte kann demontiert werden. Somit stellt die vorliegende Erfindung eine Schnellwechselvorrichtung bereit, die unterschiedlich zum Stand der Technik keine fest am Nutzfahrzeug montierte Anbauplatte mehr erfordert, sondern die Anbauplatte gewissermaßen die Doppelfunktion der bisherigen Anbauplatte und Montageplatte übernimmt.

Hierfür ist die erfindungsgemäße Anbauplatte auch nicht mehr fest am Nutzfahrzeug montiert. Vielmehr weist die Anbauplatte im oberen Bereich der Rückseite zur lösbar hängenden Befestigung an der fahrzeugseitig montierten Anbaueinrichtung eine Kupplungs-einrichtung auf, die zumindest zwischen einer die Anbaueinrichtung freigebenden Öffnungsposition und einer die Anbaueinrichtung kraft- und/oder formschlüssig greifenden Schließposition verstellbar ausgebildet ist. Damit kann die Anbauplatte auf einfache Art und Weise an der fahrzeugseitig montierten Anbaueinrichtung moniert und demontiert werden.

Unter oberer Bereich der Rückseite der Anbauplatte wird im Rahmen der vorliegenden Erfindung die obere Hälfte der Anbauplatte verstanden, also derjenige Bereich, der sich oberhalb einer Querachse der Anbauplatte befindet.

Ein weiterer wesentlicher Vorteil der erfindungsgemäßen Schnellwechselvorrichtung liegt damit in einer Gewichtsersparnis am Nutzfahrzeug, insbesondere am LKW, bei nicht angebautem Frontanbaugerät. Aufgrund der Gewichtsersparnis könnten ohne Frontanbau-gerät schwerere Anbaugeräte am LKW angebaut werden, da der LKW hierdurch ca. 150 kg mehr Nutzlast aufweist. Weiterhin wird die Eingangs diskutierte Problematik der neuen EU-Verordnung 2019/2144 umgangen, indem die Anbauplatte mit dem Frontanbaugerät bei der erfindungsgemäßen Schnellwechselvorrichtung bei einem Nichtgebrauch wieder entfernt werden kann. Dem gegenüber ist bei fest angebauten und angepassten Frontanbauplatten eine Höhenverstellung im Nachhinein beim Kunden nicht mehr möglich, da die Sensorik der Notbremsassistenten nach Anbringung der fest montierten Anbauplatte wie-der neu kalibriert werden muss und der Sensor passgenau in der Platte angebracht ist.

Gemäß einer vorteilhaften Ausführungsvariante kann vorgesehen sein, dass die Kupplungseinrichtung vorzugsweise beidseitig beabstandet zu einer Längsachse der Anbau-platte jeweils eine Kupplungsvorrichtung aufweist, die jeweils zumindest zwischen einer die Anbaueinrichtung freigebenden Öffnungsposition und einer die Anbaueinrichtung kraft- und/oder formschlüssig greifenden Schließposition verstellbar ausgebildet ist. In-dem die Kupplungseinrichtung zwei Kupplungsvorrichtungen aufweist, wird eine besonders stabile und lagefeste Anbindung der Anbauplatte an der Anbaureinrichtung des Nutzfahrzeugs realisiert, die für hohe Lasten der Anbaugeräte ausgelegt werde kann. Vorteilhaft sind die beidseitigen Kupplungsvorrichtungen spiegelsymmetrisch zu einer als Mittellängsachse ausgebildeten Längsachse der Anbauplatte vorgesehen. Durch die symmetrische Anordnung der beiden Kupplungsvorrichtungen wird eine gleichmäßige Querlastverteilung auf die Vorderradachse des Nutzfahrzeugs sichergestellt. Dies erhöht nicht nur den Fahrkomfort des Nutzfahrzeugs, sondern ist aus sicherheitstechnischen Gesichtspunkten relevant für eine sichere Handhabbarkeit des Nutzfahrzeugs.

Gemäß einer weiteren vorteilhaften Ausführungsvariante kann vorgesehen sein, dass die jeweilige Kupplungsvorrichtung zumindest eine Einhängeklaue zur hängenden Anordnung der Anbauplatte an der fahrzeugseitig montieren Anbaueinrichtung sowie wenigstens ein quer zur Längsachse zwischen der Öffnungsposition und der Schließposition verschiebbares Sperrelement aufweist. Vorteilhaft weist die jeweilige Kupplungsvorrichtung zwei im Wesentlichen parallel zueinander angeordnete Einhängeklauen auf. Damit wird eine Lastverteilung auf mehrere Bauteile, nämlich auf die zwei Einhängeklauen, sowie eine damit erhöhte Stabilität der Kupplungsvorrichtung erreicht. Indem die Kupplungsvorrichtung zudem horizontal verschiebbare Sperrelemente aufweist, ist die Anbauplatte im eingehängten und mittels der Sperrelemente vor einem ungewollten Auskoppeln, und damit Herausfallen, sowohl in horizontaler, als auch vertikaler Richtung gesichert. Somit wird im Zusammenwirken der Einhängeklauen mit den Sperrelementen eine besonders sichere Anordnung der Anbauplatte an der Anbaueinrichtung sichergestellt.

Gemäß einer nochmals weiteren vorteilhaften Ausführungsvariante kann vorgesehen sein, dass die Kupplungseinrichtung eine Schwenkhebelvorrichtung aufweist, mittels der die Sperrelemente der Kupplungsvorrichtungen vorzugsweise beidseitig synchron zwischen der Öffnungsposition und der Schließposition verstellbar ausgebildet sind. Die Schwenkhebelvorrichtung kann ferner dazu ausgebildet sein, über mehrere Hebelelemente eine Untersetzungswirkung beim Verschwenken zwischen der Öffnungsposition und der Schließposition zu erreichen. Somit kann die Schwenkvorrichtung vorzugsweise händisch ohne größeren Kraftaufwand zwischen ihren jeweiligen Schwenkpositionen, nämlich der Öffnungsposition und der Schließposition, verschwenkt werden. Indem die Schwenkhebelvorrichtung zur synchronen Betätigung beider Kupplungsvorrichtungen der Kupplungseinrichtung ausgebildet ist, wird eine konstruktiv einfache Lösung für die Betätigung der beidseitigen Kupplungsvorrichtungen erreicht, die somit zweisparend und auf einfache Weise betätigbar sind. Insbesondere erspart man sich somit eine beidseitige Betätigung der jeweiligen Kupplungsvorrichtung.

Gemäß einer nochmals weiteren vorteilhaften Ausführungsvariante kann vorgesehen sein, dass beabstandet unterhalb der Kupplungseinrichtung ein quer zur Längsachse orientiertes Trägerelement vorgesehen ist, das an der Rückseite der Anbauplatte angeordnet ist, wobei das Trägerelement zumindest an einem freien Ende eine lösbare Fixiereinrichtung aufweist, die mit der fahrzeugseitigen Anbaueinrichtung verbindbar ist. Durch das zusätzliche Vorsehen des Trägerelementes unterhalb der Kupplungseinrichtung wird die Anbauplatte nochmals weitergehend lagefixiert und stabiler an der fahrzeugseitig montierten Anbaueinrichtung gehalten. Indem die freien Enden des Trägerelements mittels einer Fixiereinrichtung an der Anbaueinrichtung vorzugsweise lösbar fixiert sind, wird die An-bauplatte gegen eine ungewollte Verdrehung um die Längsachse gesichert. Vorzugsweise kann das lösbare Fixiereinrichtung als Schraubeinrichtung, mehr im Detail als Augen-Klappenschraube, ausgebildet sein. Besonders vorteilhaft weist das Trägerelement an beiden freien Enden jeweils eine lösbare Fixiereinrichtung auf, die jeweils mit der fahrzeugseitigen Anbaueinrichtung verbindbar ist. Dabei kann die Fixiereinrichtung drehgelenkig gelagert an dem freien Ende des Trägerelementes angeordnet sein und insbesondere um eine Schwenkachse ausgebildet sein, die parallel zur Längsachse verläuft.

Gemäß einer nochmals weiteren vorteilhaften Ausführungsvariante kann vorgesehen sein, dass die Kupplungseinrichtung und das Trägerelement über eine gemeinsame Stelleinrichtung entlang der Längsachse höhenverstellbar an der Anbauplatte angeordnet sind. Die Stelleinrichtung kann hierbei eine vertikale Verschiebung der Anbauplatte relativ zu der Kupplungseinrichtung sowie dem Trägerelement ermöglichen. Vorzugweise kann also die Kupplungseinrichtung sowie das Trägerelement mittelbar, nämlich über die Stelleinrichtung, an der Anbauplatte angeordnet sein. Die Stelleinrichtung kann mehrere Raststellungen aufweisen, die eine Höhenverstellung der Anbauplatte relativ zu der Kupplungseinrichtung und somit letztlich zu der fahrzeugseitig montierten Anbaueinrichtung ermöglicht. Somit ist die Anbauplatte mittels der Stelleinrichtung höhenverstellbar an dem Nutzfahrzeug anordenbar. Dies ermöglicht grade in Bezug auf die fahrzeugseitig montierten Sensoren der Notbremsassistenten eine besonders flexible Höhenanpassung, so dass die Sensoren trotz montierter Anbauplatte der Schnellwechselvorrichtung reibungsfrei arbeiten können und die Notbremsassistenten reibungsfrei funktionieren.

Gemäß einer nochmals weiteren vorteilhaften Ausführungsvariante kann vorgesehen sein, dass die Anbauplatte im oberen Bereich einen oberen freien Endabschnitt mit zumindest einer Aussparung für eine fahrzeugseitig montierte Sensoreinrichtung, insbesondere eines Notbremsassistenten, aufweist. Hierdurch kann ein Erfassungsbereich mit einem großen Erfassungswinkel der Sensoreinrichtung auch bei angebauter Anbauplatte der Schnellwechselvorrichtung erreicht werden.

Gemäß einem weiteren Aspekt betritt die vorliegende Erfindung eine Kupplungsanordnung mit einer Schnellwechselvorrichtung für Anbaugeräte an Nutzfahrzeugen gemäß der vorangehenden Beschreibung sowie einer an dem Nutzfahrzeug montierten Anbaueinrichtung. Die Schnellwechselvorrichtung der Kupplungsanordnung weist hierbei eine Anbauplatte mit einer Frontseite und einer Rückseite auf, wobei an der Frontseite der An-bauplatte das Anbaugerät zumindest mittelbar anordenbar ist und die Rückseite der Anbauplatte an der fahrzeugseitig monierten Anbaueinrichtung der Kupplungsanordnung befestigbar ist, wobei die Anbauplatte im oberen Bereich der Rückseite zur lösbar hängenden Befestigung an der Anbaueinrichtung eine Kupplungseinrichtung aufweist, die zumindest zwischen einer die Anbaueinrichtung freigebenden Öffnungsposition und einer die Anbaueinrichtung kraft- und/oder formschlüssig greifenden Schließposition verstellbar ausgebildet ist.

Gemäß einer nochmals weiteren vorteilhaften Ausführungsvariante kann vorgesehen sein, dass die Anbaueinrichtung eine mit der Kupplungseinrichtung der Schnellwechsel-vorrichtung in mechanischen Wirkeingriff bringbare obere Anbauvorrichtung aufweist.

Gemäß einer nochmals weiteren vorteilhaften Ausführungsvariante kann vorgesehen sein, dass die Anbaueinrichtung eine mit dem quer zur Längsachse orientierten Trägerelement der Schnellwechselvorrichtung in mechanischen Wirkeingriff bringbare untere Anbauvorrichtung aufweist.

Schließlich betrifft die vorliegende Erfindung ein Nutzfahrzeug, umfassend zumindest eine Kupplungsanordnung nach der vorangehenden Beschreibung.

Der Ausdruck "im Wesentlichen" bzw. "etwa" bedeutet im Sinne der Erfindung Abweichungen vom jeweils exakten Wert um bis zu +/- 10%, bevorzugt um bis zu +/- 5%, und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

### Kurze Beschreibung der Zeichnungen

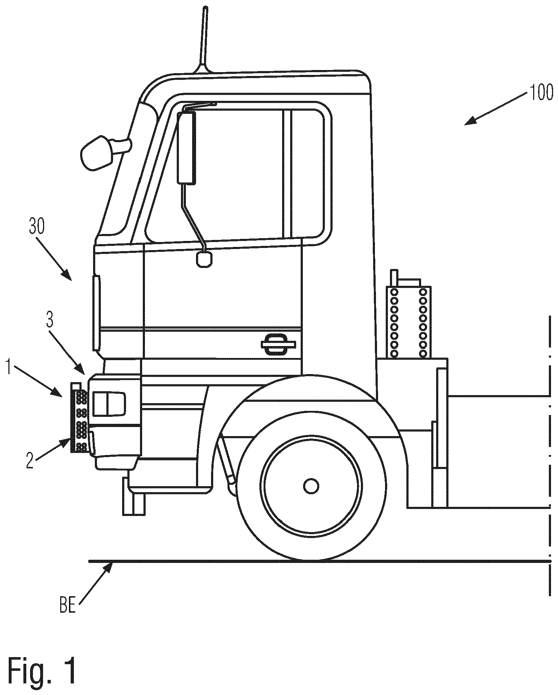

Die Erfindung soll nachfolgend anhand von Ausführungsbeispielen im Zusammenhang mit den Zeichnungen näher erläutert werden. Es zeigen
- Fig. 1: in stark vereinfachter Seitenansicht ein teilweise dargestelltes Nutzfahrzeug mit einer erfindungsgemäßen Schnellwechselvorrichtung,
- Fig. 2: in stark schematisierter Perspektivansicht eine beispielhafte Ausführungsvariante einer Kupplungsanordnung mit einer erfindungsgemäßen Schnellwechselvorrichtung für Anbaugeräte eines nur schematisch angedeuteten Nutzfahrzeugs,

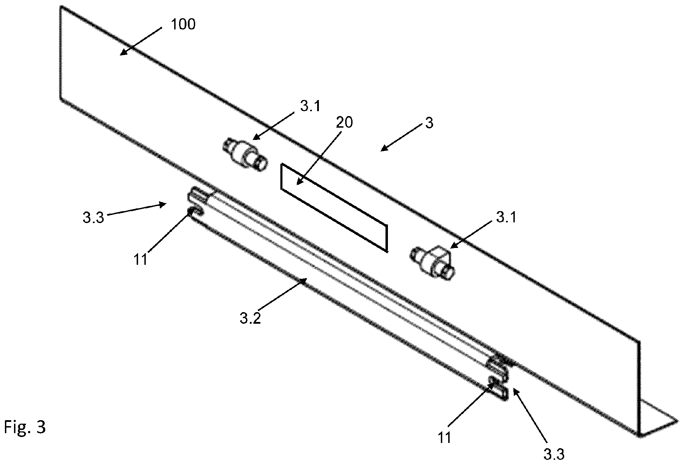

- Fig. 3: in stark schematisierter Perspektivansicht eine Ausführungsvariante einer Anbaueinrichtung eines nur schematisch angedeuteten Nutzfahrzeugs,
- Fig.4: in stark schematisierter Perspektivansicht eine Frontansicht einer beispielhaften Ausführungsvariante einer erfindungsgemäßen Schnellwechselvorrichtung,
- Fig.5: in stark schematisierter Perspektivansicht eine Rückansicht einer beispielhaften Ausführungsvariante einer erfindungsgemäßen Schnellwechselvorrichtung in einer Öffnungsposition, und
- Fig. 6: in stark schematisierter Perspektivansicht eine Rückansicht einer beispielhaften Ausführungsvariante einer erfindungsgemäßen Schnellwechselvorrichtung in einer Öffnungsposition.

### Wege zur Ausführung der Erfindung

Für gleiche oder gleich wirkende Elemente der Erfindung werden in den Figuren identische Bezugszeichen verwendet. Ferner werden der Übersichtlichkeit halber nur Bezugs-zeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

Die in den Figuren allgemein mit 1 bezeichnete Schnellwechselvorrichtung ist dabei für die Anordnung, insbesondere lösbare Anordnung bzw. Befestigung von Anbaugeräten an Nutzfahrzeugen 100 vorgesehen und ausgebildet. Bei den Nutzfahrzeugen 100 kann es sich hierbei um Trägerfahrzeuge, beispielsweise Lastkraftwägen, vorzugsweise Lastkraftwägen für den kommunalen Einsatz wie Räum- und/oder Streufahrzeuge oder Kehrmaschinen, handeln. Bei den Anbaugeräten handelt es sich beispielsweise um Schneepflüge oder aber auch Kehrbesen, die dann mittels der erfindungsgemäßen Schnellwechselvorrichtung 1 an dem Nutzfahrzeug 100 anordenbar, insbesondere befestigbar sind.

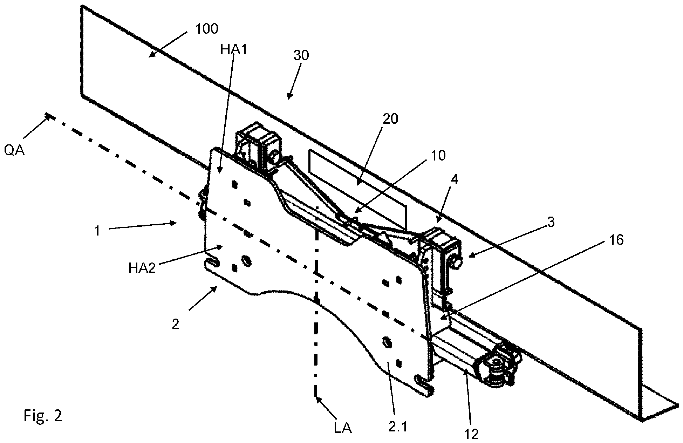

Wie beispielsweise in Figur 2 gezeigt, umfasst die Schnellwechselvorrichtung 1 zumindest eine Anbauplatte 2 mit einer Frontseite 2.1 und einer Rückseite 2.2. Die Anbaugerät sind insbesondere als Frontanbaugeräte ausgebildet, die an der Frontseite 2.1 der Anbauplatte 2 anordenbar sind. Vorzugsweise ist sowohl die Frontseite 2.1, als auch die Rückseite 2.2 eben, also planar ausgebildet. Ferner vorteilhaft ist die Frontseite 2.1 an einer der Rückseite 2.2 gegenüberliegenden Seite der Anbauplatte 2 ausgebildet. Die Anbauplatte 2 ist hierbei aus einem metallischen Werkstoff, beispielsweise Eisen oder Stahl, herstellt und vorzugsweise aus einem Vollmaterial gebildet.

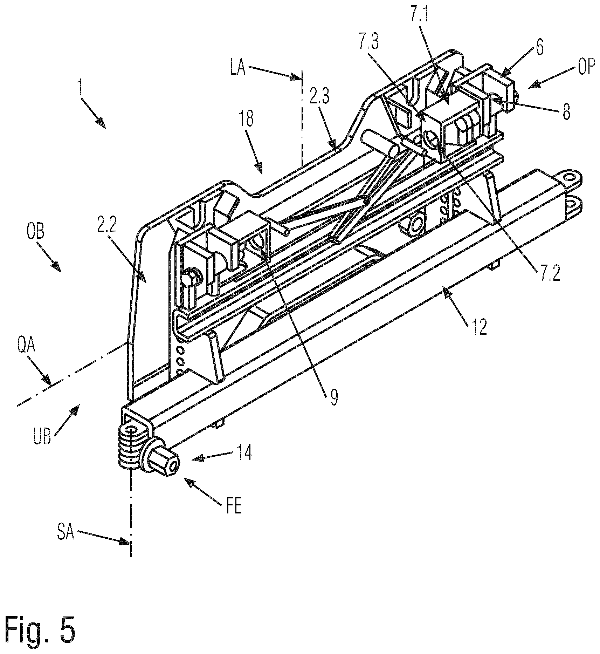

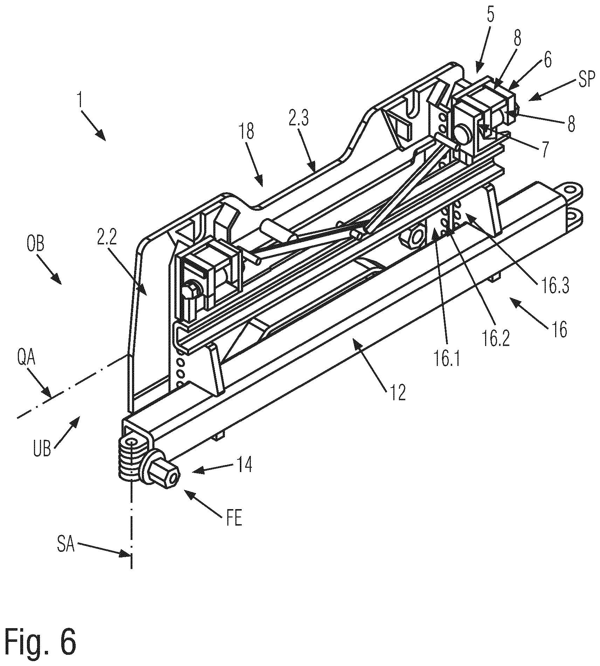

Wie bereits erwähnt wird an der Frontseite 2.1 der Anbauplatte 2 das in den Figuren nicht nähergehend dargestellte Anbaugerät zumindest mittelbar angeordnet, während die Rückseite 2.2 der Anbauplatte 2 hierbei an einer fahrzeugseitig monierten Anbaueinrichtung 3 befestigbar ist. Ferner weist die Anbauplatte 2 im oberen Bereich OB der Rückseite 2.2 zur lösbar hängenden Befestigung an der Anbaueinrichtung 3 eine Kupplungseinrichtung 4 auf, die zumindest zwischen einer die Anbaueinrichtung 3 freigebenden Öffnungsposition OP und einer die Anbaueinrichtung 3 kraft- und/oder formschlüssig greifenden Schließposition SP verstellbar ausgebildet ist. Dabei zeigt die Figur 5 die Kupplungseinrichtung 4 in der Öffnungsposition OP, während in Figur 6 die Schließposition SP der Kupplungseinrichtung 4 dargestellt ist. D

Hierbei ist der obere Bereich OB insbesondere oberhalb einer Querachse QA der Anbau-platte 2 ausgebildet, die die Anbauplatte 2 vorzugsweise mittig, mitunter auch spielsymmetrisch, in einer obere Hälfte HA1 und eine untere Hälfte HA2 teilt. Der obere Bereich OB ist insbesondere der oberen Hälfe HA1 zugeordnet.

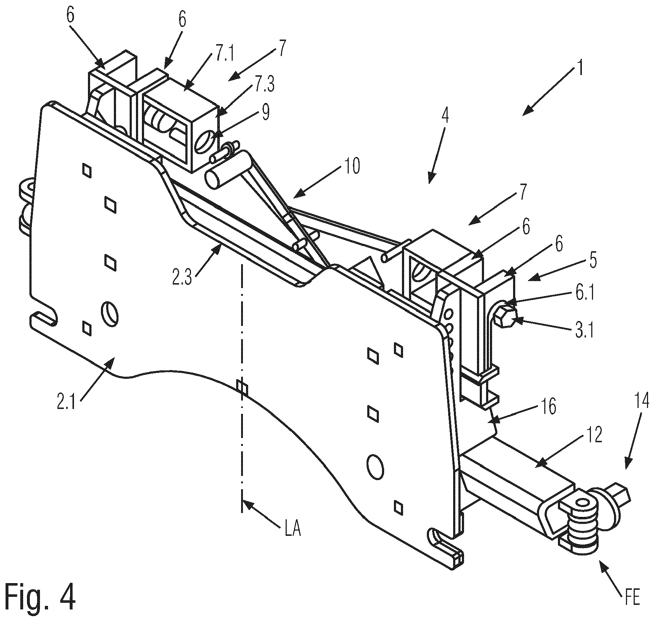

Wie insbesondere aus den Figuren 4 bis 6 ersichtlich, weist die Kupplungseinrichtung 4 vorzugsweise beidseitig beabstandet zu einer Längsachse LA der Anbauplatte 2 jeweils eine Kupplungsvorrichtung 5 auf, die jeweils zumindest zwischen der die Anbaueinrichtung 3 freigebenden Öffnungsposition OP und der die Anbaueinrichtung 3 kraft- und/oder formschlüssig greifenden Schließposition SP verstellbar ausgebildet ist. Die Längsachse LA kann hierbei insbesondere als Mittellängsachse der Schnellwechselvorrichtung 1, insbesondere auch der Anbauplatte 2 ausgebildet sein. Ferner vorteilhaft verläuft die Längsachse LA lotrecht zur Querachse QA. Die beiden Kupplungsvorrichtung 4 sind aus symmetriegründen der Lastverteilung vorteilhaft in einem jeweils gleichen Abstand zur Längsachse LA an der Rückseite 2.2 der Anbauplatte 2 vorgesehen.

Dabei kann die Kupplungseinrichtung 4 händisch zwischen den beiden Schaltpositionen verstellt werden. Insbesondere erfolgt dies mit einer im Nachfolgenden noch nähergehend beschriebenen Schwenkhebelvorrichtung 10. Alternativ ist auch eine motorisch gesteuerte Umstellung zwischen den beiden Schaltpositionen denkbar. Beispielsweise könnte hierfür auch eine Pneumatikzylindereinrichtung vorgesehen sein, die die Kupplungseinrichtung 4 zwischen der Öffnungsposition OP und der Schließposition SP verstellt.

In der dargestellten beispielhaften Ausführungsvariante umfasst die jeweilige Kupplungs-vorrichtung 5 jeweils zumindest eine Einhängeklaue 6 zur hängenden Anordnung der An-bauplatte 2 an der fahrzeugseitig montieren Anbaueinrichtung 3 sowie wenigstens ein quer zur Längsachse LA zwischen der Öffnungsposition OP und der Schließposition SP verschiebbares Sperrelement 7.

Im gezeigten Ausführungsbeispiel weist die jeweilige Kupplungsvorrichtung 5 jeweils zwei Einhängeklauen 6 auf, die entlang der Querachse QA parallel beabstandet zueinander vorgesehen sind. Mehr im Detail weist die jeweilige Einhängeklaue 6 einen U-förmigen oder auch V-förmigen Einhängeabschnitt bzw. Einhängefläche 6.1 auf, die einen Art nach unten, also in Richtung einer Bodenebene BE, weisenden Einhängehaken ausbildet.

Die jeweilige Einhängeklaue 6 umgreift mit ihrem entsprechenden Einhängeabschnitt 6.1 im eingehängten Zustand zumindest teilumfänglich die fahrzeugseitig montierte Anbau-einrichtung 3. Mehr im Detail umgreift die jeweilige Einhängeklaue 6 mit ihrem entsprechenden Einhängeabschnitt 6.1 eine obere Anbauvorrichtung 3.1 der Anbaueinrichtung 3.

Die fahrzeugseitig montierte obere Anbauvorrichtung 3.1 der Anbaueinrichtung 3 kann hierbei durch zwei zur Längsachse LA beabstandete Bolzenelemente 3.1 gebildet sein, die in ihrer jeweiligen Längserstreckung parallel zur Querachse QA orientiert sind. Vorzugsweise sind die beiden Bolzenelemente 3.1 in einem gleichen Abstand zur Längsachse LA vorgesehen.

Mittig zwischen den beiden Bolzenelementen der oberen Anbauvorrichtung 3.1 kann eine fahrzeugseitig montierte Sensoreinrichtung 20 beispielsweise eines Notbremsassistenten vorgesehenen sein. Beispielsweise kann die Sensoreinrichtung 20 als optische Erfassungseinrichtung, vorzugsweise als Radarsensoreinrichtung ausgebildet sein. Hierfür kann die Anbauplatte 2 im oberen Bereich OB einen oberen freien Endabschnitt 2.3 mit zumindest einer Aussparung 18 für die fahrzeugseitig montierte Sensoreinrichtung 20 ausbilden. Die Aussparung kann dabei als in Richtung der Querachse QA gerückte Materialaussparung in der Anbauplatte 2 ausgebildet sein, die an die Größe und Lage der Sensoreinrichtung 20 angepasst ist.

Die quer zur Längsachse LA verschiebbaren Sperrelemente 7 der Kupplungsvorrichtung 5 sind dabei im Wesentlichen U-Förmig ausgebildet, und weisen jeweils einen ersten und zweiten Schenkelabschnitt 7.1 und 7.2 sowie einen die beiden Schenkelabschnitte 7.1 und 7.2 verbindenden dritten Schenkelabschnitt 7.3 auf. In dem jeweiligen dritten Schenkelabschnitt 7.3 befindet sich jeweils eine Durchbrechung 9, die in Form und Größe an den Umfang des Bolzenelementes 3.1 angepasst ist. Der sich zwischen dem ersten und zweiten Schenkelabschnitt 7.1 und 7.2 einstellende Öffnungsbereich des entsprechenden Sperrelements 7 zeigt dabei jeweils in eine zur Längsachse LA wegorientierte, vorzugsweise rechtwinkelig wegorientierte, Richtung.

Überdies weist die jeweilige Einhängeklaue 6 jeweils ein Langloch 8 auf, das in Form und Größe an den ersten Schenkelabschnitt 7.1 angepasst ist, so dass dieser (erste Schenkelabschnitt 7.1) das Langloch 8 der entsprechenden Einhängeklaue 6 in der Schließposition SP durchdringt und die obere Anbauvorrichtung 3.1, insbesondere das entsprechen-de Bolzenelement 3.1, in die Durchbrechung 9 des dritten Schenkelabschnittes 7.3 des Sperrelementes 7 derart eingeführt ist, dass die Schnellwechselvorrichtung 1 mechanisch gesperrt an der Anbaueinrichtung 3 gehalten ist. Die solcherart in Richtung der Querachse QA verschobenen Sperrelemente 7 könnten zum Lösen der mechanischen Sperrung auch wieder in die entgegen gesetzte Richtung verstellt werden.

Hierzu weist die Kupplungseinrichtung 4 eine Schwenkhebelvorrichtung 10 auf, mittels der die Sperrelemente 7 der Kupplungsvorrichtungen 4 vorzugsweise beidseitig synchron zwischen der Öffnungsposition OP und der Schließposition SP verstellbar ausgebildet sind. Die Schwenkhebelvorrichtung 10 ist hierfür mit den Sperrelementen 7 mechanisch verbunden und dazu ausgebildet, diese in das jeweilige Langloch 8 der entsprechenden Einhängeklaue 6 und die Durchbrechung 9 des dritten Schenkelabschnittes 7.3 des Sperrelementes 7 auf das Bolzenelement 3.1 zu schieben.

In Richtung der Längsachse LA beabstandet unterhalb der Kupplungseinrichtung 4 ist ferner ein quer zur Längsachse LA orientiertes Trägerelement 12 vorgesehen, das an der Rückseite 2.2 der Anbauplatte 2 angeordnet ist. Das Trägerelement 12 kann dabei beispielweise als Hohlprofilträger, insbesondere als Rechteckrohr als beispielweise Eisen oder Stahl, ausgebildet sein. Das Trägerelement 12 weist zudem zumindest an einem freien Ende FE, vorzugsweise an beiden freien Enden FE, eine lösbare Fixiereinrichtung 14 auf, die mit der fahrzeugseitigen Anbaueinrichtung 3 verbindbar ist. Dabei kann die Fixiereinrichtung 14 drehgelenkig gelagert an dem freien Ende FE des Trägerelementes 12 angeordnet sein und insbesondere um eine Schwenkachse SA ausgebildet sein, die parallel zur Längsachse LA verläuft.

Mehr im Detail weist die Anbaueinrichtung 3 eine mit dem quer zur Längsachse LA orientierten Trägerelement 12 der Schnellwechselvorrichtung 1 in mechanischen Wirkeingriff bringbare untere Anbauvorrichtung 3.2 auf, die im gezeigten Ausführungsbeispiel der Figuren als Haltplatte 3.2 ausgebildet ist. Die untere Anbauvorrichtung 3.2 weist ebenfalls an beiden entlang der Längsasche LA orientierten freien Enden 3.3 eine U-förmige Ausnehmung 11 auf, in die die Fixiereinrichtung 14 im einhängten Zustand der Anbauplatte 2 eingeschenkt und durch Hintergreifen der Ausnehmung 11 verschraubt werden können.

Zudem kann vorgesehen sein, dass die Kupplungseinrichtung 4 und das Trägerelement 12 über eine gemeinsame Stelleinrichtung 16 entlang der Längsachse LA höhenverstellbar an der Anbauplatte 2 angeordnet sind. Die Stelleinrichtung 16 kann über eine Rasterung in definierbaren Stellschritten höhenverstellbar ausgebildet sein. Alternativ kann die Stelleinrichtung 16 auch zur stufenlosen Höhenverstellung ausgebildet sein. In der in den Figuren darstellten Ausführungsvariante weist die Stelleinrichtung 16 ein an der Rückseite 2.2 der Anbauplatte 2 fest angeordnetes Profilelement 16.1 mit mehreren Indexöffnungen 16.2 auf, entlang dem ein relativ dazu verschiebbares Aufnahmeelement 16.3 höhenfestlegbar ist. Insbesondere sind die Kupplungseinrichtung 4 sowie das Trägerelement 12 an dem Aufnahmeelement 16.3 angeordnet.

Die Erfindung wurde voranstehend an Ausführungsbeispielen beschrieben. Es versteht sich, dass eine Vielzahl von Änderungen oder Abwandlungen möglich sind, ohne dass dadurch der durch die Patentansprüche definierte Schutzbereich der Erfindung verlassen wird.

### Bezugszeichenliste

- 1: Schnellwechselvorrichtung
- 2: Anbauplatte
- 2.1: Frontseite
- 2.2: Rückseite
- 3: Anbaueinrichtung
- 3.1: obere Anbauvorrichtung, bzw. Bolzenelement
- 3.2: untere Anbauvorrichtung, bzw. Haltplatte
- 3.3: freies Ende
- 4: Kupplungseinrichtung
- 5: Kupplungsvorrichtung
- 6: Einhängeklaue
- 6.1: Einhängeabschnitt
- 7: Sperrelement
- 7.1: erster Schenkelabschnitt
- 7.2: zweiter Schenkelabschnitt
- 7.3: dritter Schenkelabschnitt
- 8: Durchbrechung
- 9: Durchbrechung
- 10: Schwenkhebelvorrichtung
- 11: Ausnehmung
- 12: Trägerelement
- 16: Stelleinrichtung
- 16.1: Profilelement
- 16.2: Indexöffnungen
- 16.3: Aufnahmeelement
- 18: Aussparung
- 20: Sensoreinrichtung
- 30: Kupplungsanordnung
- 100: Nutzfahrzeug
- BE: Bodenebene
- FE: freies Ende
- HA1: obere Hälfte
- HA2: untere Hälfte
- OB: oberer Bereich
- OP: Öffnungsposition
- UB: unterer Bereich
- SA: Schwenkachse
- SP: Schließposition
- LA: Längsachse
- QA: Querachse

## Patentansprüche

1. Schnellwechselvorrichtung (1) für Anbaugeräte an Nutzfahrzeugen (100), insbesondere für Schneepflüge oder Kehrbesen, zumindest umfassend eine Anbauplatte (2) mit einer Frontseite (2.1) und einer Rückseite (2.2), wobei an der Frontseite (2.1) der Anbauplatte (2) das Anbaugerät zumindest mittelbar anordenbar ist und die Rückseite (2.2) der Anbauplatte (2) an einer fahrzeugseitig monierten Anbaueinrichtung (3) befestigbar ist, wobei die Anbauplatte (2) im oberen Bereich (OB) der Rückseite (2.2) zur lösbar hängenden Befestigung an der Anbaueinrichtung (3) eine Kupplungseinrichtung (4) aufweist, die zumindest zwischen einer die Anbaueinrichtung (3) freigebenden Öffnungsposition (OP) und einer die Anbaueinrichtung (3) kraft- und/oder formschlüssig greifenden Schließposition (SP) verstellbar ausgebildet ist.

2. Schnellwechselvorrichtung (1) nach Anspruch 1, **dadurch gekennzeichnet, dass** die Kupplungseinrichtung (4) vorzugsweise beidseitig beabstandet zu einer Längsachse (LA) der Anbauplatte (2) jeweils eine Kupplungsvorrichtung (5) aufweist, die jeweils zumindest zwischen der die Anbaueinrichtung (3) freigebenden Öffnungsposition (OP) und der die Anbaueinrichtung (3) kraft- und/oder formschlüssig greifenden Schließposition (SP) verstellbar ausgebildet ist.

3. Schnellwechselvorrichtung (1) nach Anspruch 2, **dadurch gekennzeichnet, dass** die jeweilige Kupplungsvorrichtung (5) zumindest eine Einhängeklaue (6) zur hängenden Anordnung der Anbauplatte (2) an der fahrzeugseitig montieren Anbaueinrichtung (3) sowie wenigstens ein quer zur Längsachse (LA) zwischen der Öffnungsposition (OP) und der Schließposition (SP) verschiebbares Sperrelement (7) aufweist.

4. Schnellwechselvorrichtung (1) nach Anspruch 2 oder 3, **dadurch gekennzeichnet, dass** die Kupplungseinrichtung (4) eine Schwenkhebelvorrichtung (10) aufweist, mittels der die Sperrelemente (7) der Kupplungsvorrichtungen (4) vorzugsweise beidseitig synchron zwischen der Öffnungsposition (OP) und der Schließposition (SP) verstellbar aus-gebildet sind.

5. Schnellwechselvorrichtung (1) nach einem der vorangehenden Ansprüche, **dadurch gekennzeichnet, dass** beabstandet unterhalb der Kupplungseinrichtung (4) ein quer zur Längsachse (LA) orientiertes Trägerelement (12) vorgesehen ist, das an der Rückseite (2.2) der Anbauplatte (2) angeordnet ist, wobei das Trägerelement (12) zumindest an einem freien Ende (FE) eine lösbare Fixiereinrichtung (14) aufweist, die mit der fahrzeugseitigen Anbaueinrichtung (3) verbindbar ist.

6. Schnellwechselvorrichtung (1) nach einem der vorangehenden Ansprüche, dass die Kupplungseinrichtung (4) und das Trägerelement (12) über eine gemeinsame Stelleinrichtung (16) entlang der Längsachse (LA) höhenverstellbar an der Anbauplatte (2) angeordnet sind.

7. Schnellwechselvorrichtung (1) nach einem der vorangehenden Ansprüche, dass die Anbauplatte (2) im oberen Bereich (OB) einen oberen freien Endabschnitt (2.3) mit zumindest einer Aussparung (18) für eine fahrzeugseitig montierte Sensoreinrichtung (20), insbesondere eines Notbremsassistenten, aufweist.

8. Kupplungsanordnung (30) mit einer Schnellwechselvorrichtung (1) für Anbaugeräte an Nutzfahrzeugen (100) gemäß einem der Ansprüche 1 bis 7 sowie einer an dem Nutzfahrzeug (100) montierten Anbaueinrichtung (3), wobei die Schnellwechselvorrichtung (1) der Kupplungsanordnung (30) eine Anbauplatte (2) mit einer Frontseite (2.1) und einer Rückseite (2.2) aufweist, wobei an der Frontseite (2.1) der Anbauplatte (2) das Anbaugerät zumindest mittelbar anordenbar ist und die Rückseite (2.2) der Anbauplatte (2) an der fahrzeugseitig monierten Anbaueinrichtung (3) der Kupplungsanordnung (30) befestigbar ist, wobei die Anbauplatte (2) im oberen Bereich (OB) der Rückseite (2.2) zur lösbar hängenden Befestigung an der Anbaueinrichtung (3) eine Kupplungseinrichtung (4) aufweist, die zumindest zwischen einer die Anbaueinrichtung (3) freigebenden Öffnungsposition (OP) und einer die Anbaueinrichtung (3) kraft- und/oder formschlüssig greifenden Schließposition (SP) verstellbar ausgebildet ist.

9. Kupplungsanordnung nach Anspruch 8, **dadurch gekennzeichnet, dass** die Anbaueinrichtung (3) eine mit der Kupplungseinrichtung (4) der Schnellwechselvorrichtung (1) in mechanischen Wirkeingriff bringbare obere Anbauvorrichtung (3.1) aufweist.

10. Kupplungsanordnung nach Anspruch 8 oder 9, **dadurch gekennzeichnet, dass** die Anbaueinrichtung (3) eine mit dem quer zur Längsachse (LA) orientierten Trägerelement (12) der Schnellwechselvorrichtung (1) in mechanischen Wirkeingriff bringbare untere Anbauvorrichtung (3.2) aufweist.

11. Nutzfahrzeug (100), umfassend zumindest eine Kupplungsanordnung (30) nach einem der vorangehenden Ansprüche 8 bis 10.
